# EUROPÄISCHE PATENTSCHRIFT

(11) **EP 1 723 344 B1**
(45) Veröffentlichungstag und Bekanntmachung des Hinweises auf die Patenterteilung: **08.10.2008**
(21) Anmeldenummer: 05716644.9
(22) Anmeldetag: 08.02.2005
(51) Int. Cl.: F16C 29/02

(54) **WINKELLUFTLAGER MIT LINEAR ZUEINANDER VERSCHIEBBAREN LÄNGLICHEN FÜHRUNGSTEILEN**
CORNER AIR BEARING WITH ELONGATE GUIDE PARTS WHICH CAN BE MOVED TOWARDS EACH OTHER IN A LINEAR MANNER
COUSSINET D'AIR ANGULAIRE A ELEMENTS DE GUIDAGE ALLONGES POUVANT ETRE RAPPROCHES DE MANIERE LINEAIRE

(30) Priorität: 12.03.2004 DE 102004012204
(43) Veröffentlichungstag der Anmeldung: 22.11.2006
(73) Patentinhaber: SIEMENS AKTIENGESELLSCHAFT, 80333 München (DE)
(72) Erfinder: MEHDIANPOUR, Mohammad, 81829 München (DE); CONRAD, Robert, 82054 Sauerlach (DE)
(86) Internationale Anmeldenummer: PCT/EP2005/050533
(87) Internationale Veröffentlichungsnummer: WO 2005/088145

(56) Entgegenhaltungen:
- EP-A- 0 418 200

## Beschreibung

Die Erfindung bezieht sich auf ein Winkelluftlager mit linear zueinander verschiebbaren länglichen Führungsteilen mit zumindest zwei zueinander v-förmig gewinkelten Führungsebenen und entsprechend paarweise einander zugewandten Führungsflächen

Ein derartiges Winkelluftlager ist z.B. durch die EP 0418200 A bekannt geworden. Danach sind die beiden Führungsteile als Winkelschienen ausgebildet. Eine stationäre Innenschiene bildet eine Innenecke, in der eine mobile Winkelschiene an ihren Schenkelaußenseiten verschiebbar geführt ist. Die beiden Schienen sind ferromagnetisch gegeneinander vorgespannt. In den Spalt zwischen den beiden Schienen wird Druckluft eingebracht, die die beiden Winkelschienen soweit voneinander abhebt, dass die magnetische Anziehungskraft aufgehoben wird und die beiden Teile berührungsfrei gegeneinander verschiebbar sind. Um auch unter wechselnden Belastungen eine sichere Führung zu gewährleisten, ist es notwendig, dass die jeweiligen eine Führungsebene bildenden Führungsflächen möglichst genau parallel zueinander ausgerichtet sind. Bei der Herstellung der Führungsteile ist es nicht möglich, den Außenwinkel und den Innenwinkel in einer Aufspannung zu bearbeiten, so dass Winkelabweichungen an den Führungsflächen nur schwer zu vermeiden sind.

Der Erfindung liegt die Aufgabe zugrunde, den Herstellungsaufwand zu verringern und die Führungssicherheit zu erhöhen.

Diese Aufgabe wird durch die Erfindung gemäß Anspruch 1 gelöst. Durch die Beweglichkeit des Schwenkteiles ist es möglich, dass beide Paare der Führungsflächen genau parallel zueinander ausgerichtet werden. Dabei ist es von Vorteil, dass sich der statische Druck in einem engeren Spaltbereich erheblich erhöht, während er im weiteren Spaltbereich stark abbaut. Das bedeutet, dass sich bei einer Schräglage der festen zur schwenkbaren Führungsfläche eine gleichbleibend dicker Spalt einstellt und die beiden Führungsflächen parallel zueinander ausgerichtet werden, so dass sich die Berührungsgefahr verringert und die Führungssicherheit entsprechend erhöht. Es erübrigt sich auch die aufwändige Anpassung der beiden Funktionswinkel, was den Herstellungsaufwand entsprechend verringert.

Vorteilhafte Weiterbildungen der Erfindung sind in den Ansprüchen 2 bis 8 gekennzeichnet.

Der Rundstab nach Anspruch 2 bildet eine einfache scharnierartige Abstützung, die weitgehend von Vorspannungen frei ist und eine gute Anpassung der Führungsflächen ermöglicht. Der Stützkörper nach Anspruch 3 kann z. B. als an einem Schenkel stirnseitig anliegende Zwischenlage zu einem festen Schenkel ausgebildet sein. Der schwenkbare Schenkel kann z. B. durch leicht vorgespannt Halteelement am festen Schenkel gesichert werden.

Das Festkörpergelenk nach Anspruch 4 bedarf lediglich einer entsprechenden Formgebung, um zwischen dem festen Schenkel und dem schwenkbaren Schenkel eine einfache einstückige Verbindung herstellen zu können, ohne dass dafür weitere Montageelemente erforderlich sind.

Bei der Weiterbildung nach Anspruch 5 kann das Schwenkteil raumsparend und elastisch nachgiebig mit dem festen Schenkelteil verbunden werden.

Die Weiterbildung nach Anspruch 6 kommt vor allem dann in Frage, wenn an diesem Schenkel stark wechselnde Lagerkräfte auftreten. Die mittlere Abstützung gewährleistet selbst bei erhöhten Lagerkräften eine gleichbleibende Winkelstellung.

Durch die Weiterbildung nach Anspruch 7 kann das mobile Führungsteil mechanisch einfach leicht und stabil ausgebildet werden, was z. B. in der Montagetechnik hohe Beschleunigungen ermöglicht.

Durch die Weiterbildung nach Anspruch 8 ist gewährleistet, dass die entlang der Führungsebene wirksamen Kräfte aufeinander zentriert werden, was die wechselseitige Anpassung der Lagerwinkel erleichtert.

Im folgenden wird die Erfindung anhand von in der Zeichnung dargestellten Ausführungsbeispielen näher erläutert. Es zeigen:
- Figur 1: eine perspektivische Explosionsdarstellung eines Winkelluftlagers mit einer Greifereinheit
- Figur 2: eine Teilansicht eines modifizierten Winkelluftlagers nach Figur 1
- Figur 3: eine Teilansicht eines weiteren modifizierten Winkelluftlagers nach Figur 1.

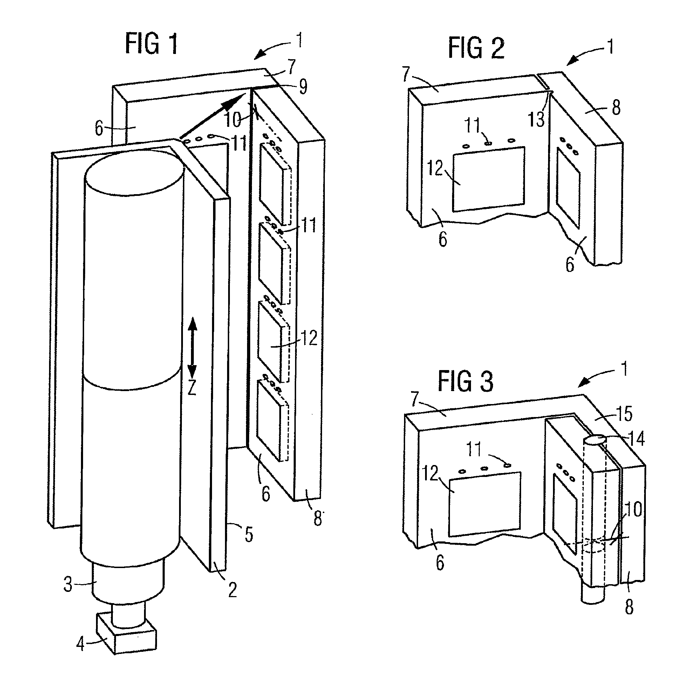

Nach Figur 1 besteht ein Winkelluftlager aus einem stationären Führungsteil 1 und einem mobilen, in der Richtung des Pfeiles Z verschiebbaren Führungsteil 2, das eine Greifereinheit 3 für elektrische Bauelemente 4 trägt, die z.B. auf eine nicht dargestellte Leiterplatte aufsetzbar sind. Die beiden Führungsteile sind als Winkelschienen ausgebildet, wobei das mobile Führungsteil 2 einstückig starr miteinander verbundene Schenkel aufweist, deren Außenseiten als Führungsflächen 5 dienen, die den Innenseiten des stationären Führungsteils 1 zugewandt sind. Dessen Innenseiten sind ebenfalls als Führungsflächen 6 ausgebildet, die den Führungsflächen 5 des mobilen Führungsteils 2 zugewandt sind. Ein fester Schenkel 7 des stationären Führungsteils 1 ist in nicht näher dargestellter Weise an einem Bestückkopf befestigt.

Der andere Schenkel des stationären Führungsteils 1 ist als Schwenkteil 8 ausgebildet, das am festen Schenkel 7 über einen zwischengelegten elastomeren streifenförmigen Stützkörper 9 gehalten ist, der für die beiden Teile eine Gelenkachse bildet, die durch z. B. schraubenartige Halteelemente 10 gesichert ist. In den Führungsflächen 6 münden Öffnungen 11, die in nicht näher dargestellter Weise mit einer Druckluftquelle verbunden sind. Ferner sind in die Schenkel 6 und 7 Permanentmagnete 12 eingesetzt, die z. B. durch Überschleifen zusammen mit den umgebenden Schenkelteile eine durchgehende Ebene bilden.

Im Betriebsfall ist das mobile Führungsteil 2 dem stationären Führungsteil 1 in der Richtung des schräg nach oben weisenden Pfeiles derart angenähert, dass sich zwischen den Führungsflächen 5 und 6 definierte Luftspalte ausbilden, bei denen sich zwischen den Magnetkräften und den aus den Öffnungen 11 eingeleiteten aerostatischen Drücken ein Gleichgewichtszustand einstellt. Die Gelenkachse des Stützkörpers 9 ermöglicht bei Winkelabweichungen zwischen den Führungsflächen 5 und 6 eine Ausrichtung des Schwenkteils 8 gegenüber dem entsprechenden Schenkel des mobilen Führungsteils 2 mit einem gleichmäßig dicken Luftspalt.

Nach Figur 2 sind der feste Schenkel 7 und das Schwenkteil 8 des Führungsteils 1 einstückig über einen schmalen biegeelastischen Lagersteg 13 miteinander verbunden, der ebenfalls eine Gelenkachse bildet, die eine Winkelanpassung der Lagerflächen 6 an die Lagerflächen 5 (Figur 1) des mobilen Führungsteils 2 ermöglicht.

Nach Figur 3 ist die Gelenkachse aus dem Eckbereich des stationären Führungsteils 1 in den mittleren Bereich des Schwenkteils 1 verlagert und als Rundstab 14 ausgebildet, der zwischen einem festen Stützschenkel 15 des stationären Führungsteils 1 und dem Schwenkteil 8 gehalten ist, das sich an diesem schwenkbar abstützt. Der mehrteilige Rundstab 14 ragt dabei in eine im Querschnitt halbkreisförmige Längsnut des Schwenkteils 8 hinein, das durch weitere Halteelemente 10 gesichert ist.

### Bezugszeichen

- 1: Stationäres Führungsteil
- 2: Mobiles Führungsteil
- 3: Greifereinheit
- 4: Bauelement
- 5, 6: Führungsfläche
- 7: Schenkel
- 8: Schwenkteil
- 9: Stützkörper
- 10: Halteelement 11 Öffnung
- 12: Permanentmagnet
- 13: Lagersteg
- 14: Rundstab
- 15: Stützschenkel

## Patentansprüche

1. Winkelluftlager mit linear zueinander verschiebbaren länglichen Führungsteilen (1, 2) mit zumindest zwei zueinander v-förmig gewinkelten Führungsebenen und entsprechend paarweise einander zugewandten Führungsflächen (5, 6),
**dadurch gekennzeichnet dass** es ein Schwenkteil (8) umfasst und dass eine der Führungsflächen (6) an dem Schwenkteil (8) ausgebildet ist, das um eine zur Verschieberichtung parallele Gelenkachse des zugehörigen Führungsteils (1) schwenkbar gelagert ist.

2. Winkelluftlager nach Anspruch 1,
**dadurch gekennzeichnet, dass** die Gelenkachse als zumindest ein Rundstab (14) ausgebildet ist, der in eine offene, im Querschnitt angepasste Längsnut des Schwenkteils (8) hineinragt und dass der Rundstab (14) in der Längsnut mittels Halteelementen (10) gesichert ist.

3. Winkelluftlager nach Anspruch 1,
**dadurch gekennzeichnet, dass** die Gelenkachse als elastomerer streifenförmiger Stützkörper (9) ausgebildet ist.

4. Winkelluftlager nach Anspruch 1,
**dadurch gekennzeichnet, dass** die Gelenkachse als Festkörpergelenk mit einem biegeelastischen Lagersteg (13) ausgebildet ist.

5. Winkelluftlager nach einem der Ansprüche 1 bis 4,
**dadurch gekennzeichnet, dass** die Gelenkachse im Eckbereich des Luftlagers angeordnet ist.

6. Winkelluftlager nach einem der Ansprüche 1 bis 4,
**dadurch gekennzeichnet, dass** die Gelenkachse hinter der Führungsfläche (6) annähernd im mittleren Bereich der Quererstreckung der Führungsfläche (6) angeordnet ist.

7. Winkelluftlager nach einem der vorhergehenden Ansprüche,
**dadurch gekennzeichnet, dass** das Schwenkteil (8) am stationären Führungsteil (1) ausgebildet ist, dessen Führungsflächen (6) eine Innenecke bilden.

8. Winkelluftlager nach einem der vorhergehenden Ansprüche,
**dadurch gekennzeichnet, dass** die Führungsteile (1, 2) ferromagnetisch gegeneinander verspannt sind und
dass am Schwenkteil (8) das Zentrum der magnetischen Kräfte in der Quererstreckung im mittleren Bereich der Führungsfläche (6) liegt.

## Claims

1. Angular air bearing having elongate guide parts (1, 2) which are linearly displaceable relative to each other and have at least two guide planes which are angled in a V-shape relative to each other and guide surfaces (5, 6) correspondingly facing each other in pairs,
**characterised in that** said angular air bearing comprises a pivoting part (8) and that one of the guide surfaces (6) is embodied on the pivoting part (8) which is pivotably mounted about an articulated axis of the associated guide part (1), which articulated axis is arranged parallel to the direction of displacement.

2. Angular air bearing according to claim 1,
**characterised in that** the articulated axis is embodied as at least one cylindrical rod (14) which projects into an open longitudinal groove of the pivoting part (8), said groove being matched in cross-section, and that the cylindrical rod (14) is secured in the longitudinal groove by means of fastening elements (10).

3. Angular air bearing according to claim 1,
**characterised in that** the articulated axis is embodied as an elastomeric strip-shaped support element (9).

4. Angular air bearing according to claim 1,
**characterised in that** the articulated axis is embodied as a flexure hinge having a flexurally elastic bearing web (13).

5. Angular air bearing according to one of claims 1 to 4,
**characterised in that** the articulated axis is arranged in the corner area of the air bearing.

6. Angular air bearing according to one of claims 1 to 4,
**characterised in that** the articulated axis is arranged behind the guide surface (6) approximately in the central area of the transversal extension of the guide surface (6).

7. Angular air bearing according to one of the preceding claims, **characterised in that** the pivoting part (8) is embodied on the stationary guide part (1) whose guide surfaces (6) form an internal corner.

8. Angular air bearing according to one of the preceding claims, **characterised in that** the guide parts (1, 2) are ferromagnetically braced against each other and that the centre of the magnetic forces on the pivoting part (8) lies in the transversal extension in the central area of the guide surface (6).

## Revendications

1. Coussinet d'air angulaire comprenant des parties de guidage (1, 2) allongées pouvant coulisser de façon linéaire les unes par rapport aux autres avec au moins deux plans de guidage coudés en V l'un par rapport à l'autre et des surfaces de guidage (5, 6) tournées l'une vers l'autre de façon correspondante par paires,
**caractérisé en ce qu'**il comprend une partie pivotante (8) et que l'une des surfaces de guidage (6) est réalisée sur la partie pivotante (8), qui est logée de façon à pouvoir basculer autour d'un axe d'articulation, parallèle au sens de déplacement, de la partie de guidage (1) correspondante.

2. Coussinet d'air angulaire selon la revendication 1,
**caractérisé en ce que** l'axe d'articulation est conçu sous la forme d'au moins une barre ronde (14), qui dépasse à l'intérieur d'une rainure longitudinale, ouverte et adaptée en section, de la partie pivotante (8) et **en ce que** la barre ronde (14) est bloquée dans la rainure longitudinale au moyen d'éléments de retenue (10).

3. Coussinet d'air angulaire selon la revendication 1,
**caractérisé en ce que** l'axe d'articulation est conçu sous la forme d'un corps de support (9) élastomère en forme de bande.

4. Coussinet d'air angulaire selon la revendication 1,
**caractérisé en ce que** l'axe d'articulation est conçu sous la forme d'articulation de solide avec un élément de palier (13) élastique en flexion.

5. Coussinet d'air angulaire selon l'une quelconque des revendications 1 à 4,
**caractérisé en ce que** l'axe d'articulation est disposé dans la zone d'angle du coussinet d'air.

6. Coussinet d'air angulaire selon l'une quelconque des revendications 1 à 4,
**caractérisé en ce que** l'axe d'articulation est disposé derrière la surface de guidage (6) approximativement dans la zone centrale de l'extension transversale de la surface de guidage (6).

7. Coussinet d'air angulaire selon l'une quelconque des revendications précédentes,
**caractérisé en ce que** la partie pivotante (8) est réalisée sur la partie de guidage (1) stationnaire, dont les surfaces de guidage (6) forment un coin intérieur.

8. Coussinet d'air angulaire selon l'une quelconque des revendications précédentes,
**caractérisé en ce que** les parties de guidage (1, 2) sont tendues les unes par rapport aux autres ferromagnétiquement et **en ce que**, sur la partie pivotante (8), le centre des forces magnétiques se situe dans l'extension transversale dans la zone centrale de la surface de guidage (6).
